Europäisches Patentamt

European Patent Office

Office européen des brevets

(19)

(11) Publication number: **0 169 291**

**B1**

(12) **EUROPEAN PATENT SPECIFICATION**

(45) Date of publication of patent specification: **24.08.88**

(21) Application number: **84830304.6**

(22) Date of filing: **14.11.84**

(51) Int. Cl.⁴: **B 60 Q 1/54**

(54) **An external speed display device for motor vehicles.**

(30) Priority: **02.05.84 IT 4811684**

(43) Date of publication of application:
**29.01.86 Bulletin 86/05**

(45) Publication of the grant of the patent:
**24.08.88 Bulletin 88/34**

(84) Designated Contracting States:
**AT BE CH DE FR GB LI NL SE**

(56) References cited:
**DE-A-2 520 195**
**DE-A-2 901 458**
**DE-A-2 921 676**
**DE-A-3 033 125**
**DE-U-6 939 833**
**FR-A-1 409 128**
**FR-A-2 221 041**

**PATENT ABSTRACTS OF JAPAN, vol. 4, no.**
**123, 30th August 1980, page (M-29) (605); &**
**JP-A-55-79724 (KAYOKO BANDOU) 16-06-1980**

(73) Proprietor: **Felicetti, Umberto**
**Via Rossini, 8**
**I-87040 Castrolibero (CS) (IT)**

(72) Inventor: **Felicetti, Umberto**
**Via Rossini, 8**
**I-87040 Castrolibero (CS) (IT)**

(74) Representative: **Mascioli, Alessandro, Prof.Dr.**
**c/o A.N.D.I. Associazione Nazionale degli**
**Inventori Via Lima, 35**
**I-00198 Roma (IT)**

# Description

The present invention concerns a device for the external display of the speed of automobiles for allowing the ascertainment of the speed in case of collision.

It is known that a motorist on the road can only provide two types of information; he can let us know if he is braking, or that he is going to pass, or that he is going to turn right or left. If he brakes, one is not able to known how hard he is braking or how much he can diminish the distance with respect to an overtaking car. From a distance one cannot even tell if the car is moving or not, or if the speed of the car behind is double or triple his own. If he passes it could be untimely. Therefore the motorist in the car ahead of use can tell us if he is applying brakes, passing or turning, but he cannot signal the most important thing, that is the speed at which he is travelling. If we knew the speed, in fact, we would be wble to see if it was decreasing and if so by how much. Knowing the speed of the car in front of use would enable us to react correctly even if the driver neglected to signal a turn or pass.

The prior art provides many speedometer devices that provide a suitable display, inside the vehicle, of the speed, like in patent FR—A—2221041 or FR—A—1409128, wherein the speedometers consist in a box housing, a rotating shaft indicator provided with a helical line on the external surface of said shaft, this latter being coloured so as to provide an externally visible mobile indication along an externally graduated dial of the box.

Other documents, like patent JP—A—55-79724 and DE—A—2921676, concerning electronical devices, provide that said indicators be placed externally to the vehicle.

On the contrary, the present invention provides a completely mechanical device that allows the external display as well as the mechanical recording of the speed in case of collision.

With respect to e.g. FR—A—2 221 041 disclosing a device which has the dimension of a normal car fender placed externally to the vehicle, and may be positioned either under or over the fender, consisting in a box housing provided with a helical mobile indication, realized out of a coloured shaft on the outer surface thereof an indicator thread runs, rotating according to the speed, the present invention is characterized in that said indicator shaft is housed inside a cylindrical tube of transparent plastic material internally coated with a layer of lighter transparent plastic material on which, in case of collision, a groove is effected by the thread of triangular section, slightly projecting with respect to said shaft's surface.

In a slightly different version the indicator is orange in colour, easily visible form a distance during the day, illuminated at night, advancing from left to right and intensifying in colour as the speed of the vehicle increases.

The dimensions of the invented device are expected to correspond to the width of the motor vehicle to which it will be attached in order to ensure the best visibility.

The device, in addition, serves a second purpose: it is equipped with a mechanism that activates, by electrical contact, a flashing light situated on the extreme right whenever the indicator exceeds the maximum speed allowed that type of vehicle. At ths same time an internal acoustic signal or luminous intermittent dial located on the instrument panel is also activated. By means of such a device both driver and others are warned that the vehicle is travelling at a speed superior to that permitted and is therefore in dangerous conditions.

The eventual choice of the colour blue for the flashing light outside is suggested by the blue flashing lights normally used by emergency vehicles (ambulances etc.).

And finally a third function is performed by the device. It is realized in such a way that in case of collision the consequent deformation of the vehicle causes the instant blocking of the speed indicator at the moment of collision. This enables us to reveal the exact speed of motor vehicles involved in accidents at the moment of impact. This result is obtained by means of a shaft-indicator that roates inside a cylindrical tube of rigid transparent plastic which is coaxial to it and slightly larger in diameter. This, in turn, is fixed to the frame of the vehicle. The external surface of this tube is graduated while the internal surface is lined with a sheet of soft transparent plastic. The shaft has a sharp triangular toothed thread running along the helical line separating the orange from the neutral colour. Following deformation caused by collision, the shaft will exert pressure, directly proportional to the force of impact, on the internal surface of the tube in one or more points. In those points, because the surface is impressionable, it will groove due to the wedging effect of the corner of the thread, as it happens in a nut for bolts and screws.

The external surface of the tube is graduated in helical lines, one for every degree of speed, parallel to the development of the thread-tooth. Every unit (degree of speed) is repeated at a close distance along the whole line. In such a way even if worse comes to worse and vehicle disintegrates, it will always be possible to find a piece of the grooved tube. The groove corresponds to a number which will be equivalent to the speed of the vehicle at the moment of impact.

In order to be efficient in the case of lateral collisions as well the invention provides for the presence of a thin steel cable that connects the graduated tubes to the ends of the front and read speedometers. This cable runs along the side of the vehicle inside a conducting tube with pulleys conveniently located in those points where it is necessary to go around the curves of the wheels. In the case of lateral impact the length of the cable will be strained and it will pull the ends together sharply thus damaging both speedometers which will remain deformed. In this way the invention fulfills its third purpose.

The invention therefore serves three purposes:

1) it provides an external indication of the speed of a motor vehicle;

2) it warns the driver as well as others whenever the vehicle exceeds the speed limit;

3) it records the speed of vehicles involved in accidents at the moment of collision.

By carrying out these function the device enables us to achieve results which are of great civic value in so far as the device proves to be:

1) an instrument intended for the regulation of traffic and therefore safety;

2) an instrument for the exercise of self-discipline and discipline on the road;

3) an instrument serving the forces of law and order in so far as in the case of accident or collision it performs a function similar to and as important as that of the "black box" used on airliners.

The invention is explained in detail hereinbelow according to the attached drawings which show a preferred embodiment and in which:

Figures 1, 2, 3 respectively show an external view of the device and the way it works attached to the front and rear of a vehicle.

Figures 4, 5, 6 and 7 show the shaft-indicator, the development of the graduated tube's surface, the shaft-indicator housed in the graduated tube and the transversal section of the complete device.

Figures 8 and 9 show a plant and lateral view of the steel cable mechanism, for the ascertainment of lateral collisions.

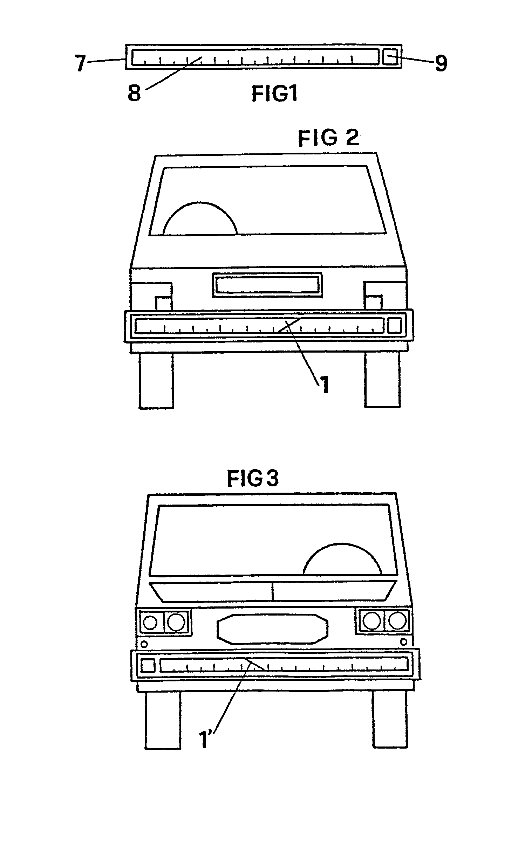

Referring to the details of the illustrations, the device consists of (fig. 1) the rectangular dial box 7 externally graduated 8 and the flashing blue light 9. Attached to the rear of a vehicle 2 the indicator 1 is pointing to a certain value which corresponds to that indicated by 1' (fig. 3) in which the device appears on the front of the vehicle.

It should be noted that when the device attached to the front fender is seen in the rearview mirror of a preceding vehicle the scale reads from left to right and the flashing light appears on the extreme right exactly as the device attached to the rear bumper appears when seen from behind.

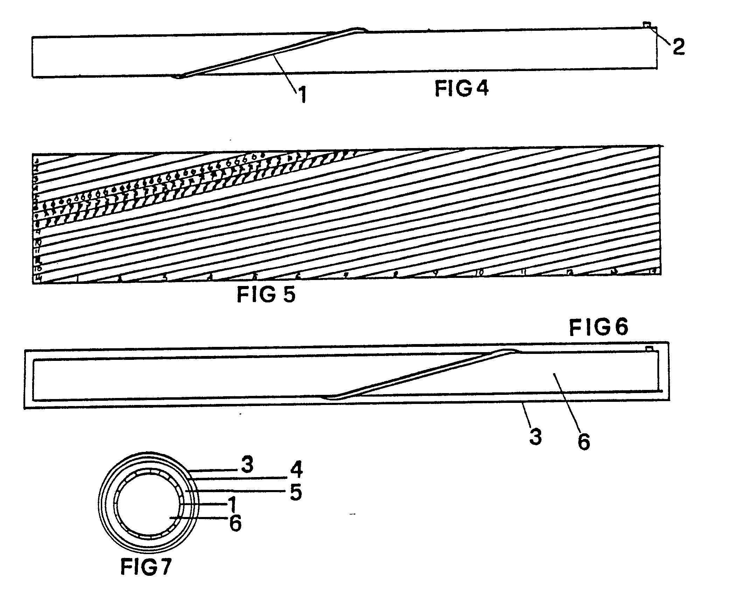

Regarding the internal structure of the device as seen in figures 4, 5, 6 and 7 the device, according to the invention, presents the shaft-indicator 6 with thread 1 and copper foil 2 which determines the contact for activating the flashing blue light and simultaneously the internal visual and/or acoustic signal, following to the rotation of the shaft operated, in a well known electric, electronic or mechanical way, according to the speed of the vehicle.

In fact, it is evident that when the speed of the vehicle increases, shaft 6 rotates and therefore the helical shape of indicator or thread 1 moves towards the end, being now visible along externally graduated dial 8 so as to provide the externally visible information about the speed.

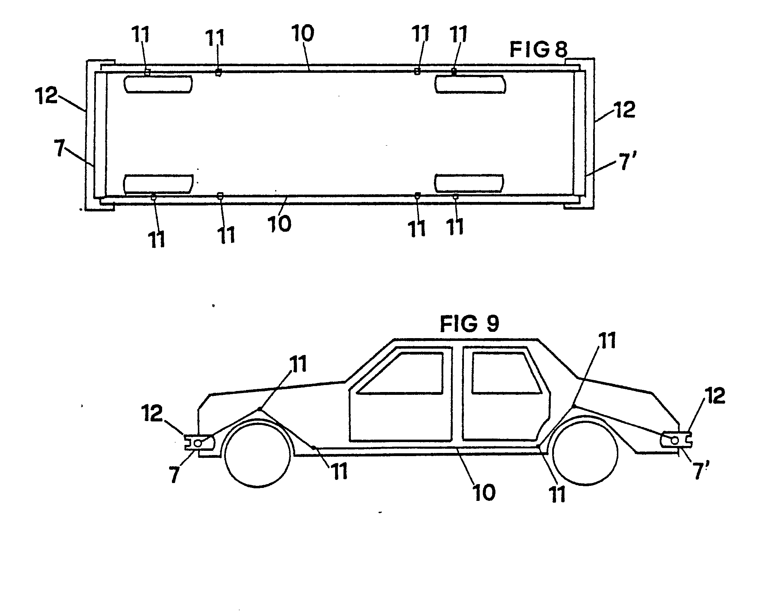

The graduated tube 3 in figure 5 shows its developped surface and is externally marked to show numeral values up to 140 km/hr; where 1 is equivalent to 10 km/hr, 2 to 20 km/hr, 3 to 30 km/hr and so on. Some numeral values are repeated at close distance along respective parallel helical lines as is shown with a succession of some of the numbers possible in the sequence. The section of the shaft 6 located inside the cylindrical tube 3 (fig. 7) shows the thickness of the tube made of rigid transparent plastic material, the transparent layer of soft plastic 4 that lines the interior of the tube, the space 5 between the tube and the shaft, the thread 1 and the shaft 6 itself. In case of collision, a groove is effected on the plastic layer 4 by the thread of the shaft indicator.

The sketches concerning lateral collisions (figure 8 and 9) show the steel cable 10 stretched between the front and rear speedometers 7, 7'. The pulleys are indicated by 11 and the fenders with hard rubber bumpers 12 to protect the speedometers 7, 7' in case of light impact.

In a different variety the mechanism for activating the visual and/or acoustic alarm could be put on the speedometer on the instrument panel, thus using a mass-produced instrument. Naturally, the device for recording of speed in case of accident could be of smaller dimensions than the one presented. Moreover, the external speed indicator could be realized in a different form with different dimensions or even a different way of operating. For example, there could be a series of different coloured blinking lights to which conventional speed limits are assigned or there could be an illuminated digital speedometer.

**Claims**

1. A device for recording of the speed of a vehicle in case of collision, consisting in an external speed display consisting in a box (7) having the dimension of a car fender, being positioned externally to the vehicle and provided with a mobile helical indicator realized out of a coloured shaft (6), on the outer surface thereof an indicator thread (1) runs, gradually rotating according to the speed, characterized in that said indicator shaft (6) is housed inside a cylindrical tube (3) of transparent plastic material internally coated with a layer (4) of lighter transparent plastic material on which, in case of collision, a groove is effected by the thread (1) having triangular section, slightly projecting with respect to the surface of said shaft.

2. A device for the external display of the speed of motor vehicles according to claim 1, characterized in an alarm signal (9), placed at one end of box (7) applied to the front and the rear of the automobile and which is activated through the contact effected by a foil (2) once the indicator thread (1) has reached the position corresponding to the maximum allowed speed.

3. A device according to claim 1, characterized in that the foil (2) operates a lighting circuit of a light and acoustic and/or visual signal housed in the passenger compartment as an alarm once the indicator has reached the maximum speed allowed to the vehicle.

4. A device according to claim 1 characterized in that said tube (3) is graduated along the external surface thereof according to parallel helical lines along the whole development whereof some numeral values are repeated at close distance for the ascertainment, in case of collision, that the groove is effected on soft plastic (4) by the cutting thread (1).

5. A device according to claim 1, characterized in that a steel cable (10) is kept in tension between boxes (7, 7') and hooked to front and rear graduated tubes (3), and sliding on pulleys (11) for ascertaining, due to the eventual deformation thereof, also lateral collisions.

**Patentansprüche**

1. Vorrichtung für die Registrierung der Geschwindigkeit eines Fahrzeuges in Zusammenstossfall, bestehend in einem äusseren Sichtgerät der Geschwindigkeits, gebildet aus einer Schachtel (7) der Dimension einer Stossstange, angeordnet äusserhalb des Fahrzeuges und versehen mit einen beweglichen schraubenförmigen Anzeiger, welcher in einem gefärbten Baum (6) realisiert ist, auf dessen Oberfläche ein Anzeigengewindeschneiden (1) läuft, das allmählich entsprechend der Geschwindigkeit des Fahrzeuges kreist, dadurch gekennzeichnet, dass der genannte Baumanzeiger (6) innerhalb eines zylindrischen Rohres (3) aus durchsichtigen plastischen Material untergebracht ist, welches Rohr völlig mit einer Schicht (4) leichterem durchsichtigen plastischen Material überzogen ist, auf dem, in Zusammenstossfall, eine Nut mittels das Gewindeschneiden (1) mit Dreieckschitt realisiert wird, wenig hervorstehend in bezug auf die Oberfläche des genannten Baumes.

2. Vorrichtung für die äussere Sichtbarmachung der Geschwindigkeit von Fahrzeugen nach Patentanspruch 1, gekennzeichnet von einen Warnzeichen (9) angeordnet an einem Ende der auf der vorderen und hinteren Seite des Automobils eingebauten Schachtel (7), und das Tätigkeit gesetzt wird durch den mittels einen Blech (2) realisierten Kontakt, wenn einmal das Anzeigengewindeschneiden (1) die Stellung entsprechend der maximalen beistimmenden Geschwindigkeit erreicht hat.

3. Vorrichtung nach Patentanspruch 1, dadurch gekennzeichnet, dass das Blech (2) eine Heizleitung eines leuchtenden und akustischen und/oder visuellen Zeichen in Gang setzt, welches untergebracht ist als Alarm, wenn der Anzeiger die dem Fahrzeug beistimmende maximale Geschwindigkeit erreicht hat.

4. Vorrichtung nach Patentanspruch 1, dadurch gekennzeichnet, dass das genannte Rohr (3) längs seiner Oberfläche nach parallelen schraubenförmigen Linien angeschnitten ist, und längs seiner vollständigen Entwicklung einige Zahlenwerten aus geringer Enrfernung wiederholt sind, um so zu versichern, im Zusammenstossfall, dass die Nut auf die weichere Plastik (4) von das scharfe Gewindeschneiden (1) realisiert worden ist.

5. Vorrichtung nach Patentanspruch 1, dadurch gekennzeichnet, dass ein Stahldraht (10) zwischen den Schachteln (7, 7') in Spannung gehaltet wird und angehängt wird an graduierten Röhren (3) in der vorderen und hinteren Seite, und gleitend auf Scheiben (11) um so auch seitliche Zusammenstosse zu versichern, im Hinblick auf eine eventuelle Verformung desselben.

**Revendications**

1. Dispositif pour l'enregistrement de la vitesse d'un véhicule en cas de collision, consistant dans un visualisateur extérieur de la vitesse composé par une boîte (7) de dimensions d'un pare-chocs, disposé à l'extérieur du véhicule et pourvu d'un indicateur mobile de forme hélicoïdale realisé dans un arbre de couleur (6), sur la surface extérieure duquel coulisse un taraudage (1) d'indication qui tourne graduellement en correspondance de la vitesse du véhicule, caractérisé en ce que. ledit arbre indicateur (6) est logé à l'intérieur d'un tube (3) cylindrique en matériel plastique transparent revêtu intérieurement d'une couche d'un matériel plastique transparent plus léger, sur laquelle, en cas de collision, est effectuée une rainure au moyen du taraudage (1) à section triangulaire, légèrement en saillie par rapport à la surface dudit arbre.

2. Dispositif pour la visualisation extérieure de la vitesse de véhicules selon la revendication 1, caractérisé par un signal (9) d'alarme disposé à une extrémité de la boîte (7) appliquée sur la partie antérieure ou postérieure de la voiture, et qui est activé au moyen du contact effectué par une tôle (2), une fois que la taraudage (1) d'indication est arrivé à la position correspondante à la maximale vitesse permise.

3. Dispositif selon la revendication 1, caractérisé en ce que la tôle (2) actionne un circuit d'allumage d'un signal lumineux et acoustique et/ou visuel, logé dans l'habitacle comme alarme, lorsque l'indicateur est arrivé à la maximale vitesse permise au véhicule.

4. Dispositif selon la revendication 1, caractérisé en ce que ledit tube (3) est encoché le long de sa surface extérieure suivant lignes hélicoïdales parallèles et, le long de son entier dégagement, quelques valeurs numériques sont répétées à distance rapprochée pour la vérification, en cas de collision, que la rainure a été effectuée sur le plastique le plus souple (4) par le taraudage (1) tranchant.

5. Dispositif selon la revendication 1, caractérisé en ce qu'un fil d'acier (10) est maintenu en tension entre les boîtes (7 7') et accroché à tubes (3) gradués dans les parties antérieure et postérieure, et coulissant sur poulies (11) pour vérifier, en considération d'une éventuelle déformation du même, aussi collision latérales.

0 169 291

FIG1

FIG 2

FIG 3

1

0 169 291

FIG 4

FIG 5

FIG 6

FIG 7

2

FIG 8

FIG 9